# EUROPEAN PATENT APPLICATION

(11) **EP 4 806 964 A1**
(43) Date of publication of application: **16.09.2026**
(21) Application number: 25773976.3
(22) Date of filing: 17.01.2025
(51) Int. Cl.: C09D 167/02, B32B 9/00, B32B 27/20, B32B 27/36, C08G 63/181, C08G 63/688, C08K 7/22, C08L 67/02

(54) **COMPOSITION FOR AQUEOUS COATING MATERIAL USING POLYESTER RESIN**

(30) Priority: 22.03.2024 JP 2024046754
(71) Applicant: TOYOBO MC Corporation, Osaka-shi, Osaka 530-0001 (JP)
(72) Inventor: GOSHIMA, Hideto, Otsu-shi, Shiga 520-0292 (JP); KANDA, Ryosuke, Otsu-shi, Shiga 520-0292 (JP)
(74) Representative: Müller-Boré & Partner Patentanwälte PartG mbB
(86) International application number: PCT/JP2025/001374
(87) International publication number: WO 2025/197272

(57) **Abstract**

The present invention provides an aqueous coating composition containing a polyester resin and inorganic particles, wherein the aqueous coating composition exhibits excellent adhesion and easy peelability particularly to a polyester substrate, anti-fogging property, and anti-blocking property, as well as a laminate and a packaging material using the aqueous coating composition. An aqueous coating composition containing a polyester resin (A) and inorganic particles (B), wherein the polyester resin (A) satisfies the following conditions (i) to (iii): (i) in the total polycarboxylic acid components that constitute the polyester resin (A), an aromatic polycarboxylic acid component having no sulfonic acid group constitutes 60 to 88 mol%, an aromatic polycarboxylic acid component having a sulfonic acid group constitutes 8 to 20 mol%, and an aliphatic polycarboxylic acid component and/or an alicyclic dicarboxylic acid component constitutes 5 to 20 mol%; (ii) in the total polyhydric alcohol components that constitute the polyester resin (A), a glycol component having an ether group constitutes more than 50 mol%; (iii) glass transition temperature of the polyester resin (A) is less than 20°C.

## Description

### Technical Field

The present invention relates to an aqueous coating composition containing a polyester resin which exhibits excellent water dispersibility. More specifically, the present invention relates to an aqueous coating composition mainly containing a polyester resin which exhibits very high hydrophilicity and water dispersibility, wherein the aqueous coating composition exhibits high adhesion, easy peelability, and anti-fogging properties when formed into a coating film.

### Background Art

Polyester resins have been widely used as raw materials for resin compositions to be used for paints, coatings, adhesives and the like. Polyester resins are generally constituted from polycarboxylic acids and polyhydric alcohols. It is possible to freely control selection and combination of polycarboxylic acids and polyhydric alcohols, as well as degree of molecular weight. The resulting polyester resins have been used in a various applications such as paints and adhesives.

In the molecular design of polyester resins, selection of copolymer components is crucial. Polycarboxylic acid components and polyhydric alcohol components can be broadly classified into aromatic, aliphatic, and alicyclic types. Selection of these components determines glass transition temperature (hereinafter referred to as "Tg"), which indicates flexibility of the polyester resin. In terms of usage mode, polyester resins are generally used as organic solvent-dissolved products or aqueous dispersion products to be applied to substrates. In recent years, aqueous dispersions have become particularly in demand due to environmental concerns. Among these, aqueous dispersions that do not require co-solvents or surfactants are in the highest demand in terms of environmental concerns and recyclability.

Furthermore, in response to a recent trend toward monomaterialization, laminated structures in which a heat-sealable polyester-based adhesive composition is applied to a polyester-based film have been used for lid materials for PET (amorphous polyethylene terephthalate) packaging containers. There has been a growing demand for polyester-based coating compositions that can be used for food applications and that also exhibit excellent adhesion, easy peelability, anti-fogging property, and anti-blocking property.

For example, Patent Document 1 proposes a composition in which an anti-fogging additive and an anti-blocking agent are added to a blend system of a semicrystalline polyester resin having Tg of - 30 to 0°C and an amorphous polyester resin having Tg of 45 to 110°C. Also, Patent Document 2 proposes an anti-fogging coating composition consisting of a polyester resin, a metal compound, and a surfactant.

### Prior Art Documents

### Patent Documents

Patent Document 1: Japanese Patent No. 7280826
Patent Document 2: Japanese Patent Application Laid-Open (JP-A) No. 2023-51805

### Disclosure of the Invention

### Problem that the Invention is to Solve

However, in Patent Document 1, although the resin composition exhibits anti-fogging property and high adhesive strength, blending of anti-fogging additives other than polyester is necessary in order to impart the anti-fogging property. Therefore, there is a problem in terms of recyclability when the resin composition is applied to a PET substrate. Furthermore, in Patent Document 2, blending of surfactants in addition to the resin is necessary in order to impart water dispersibility and anti-fogging property. This also leads to a problem in terms of recyclability when the resin composition is applied to a PET substrate.

The present invention has been devised in view of the problems of the above-mentioned prior art, and its objective is to provide an aqueous coating composition containing a polyester resin and inorganic particles, wherein the aqueous coating composition exhibits excellent adhesion and easy peelability particularly to a polyester substrate, anti-fogging property, and anti-blocking property, as well as a laminate and a packaging material using the aqueous coating composition.

### Means for Solving the Problem

As a result of intensive studies to achieve the above objective, the present inventors have found that by using a polyester resin having a specific constitution and inorganic particles in combination, it is possible to obtain an aqueous coating composition that can be used for food packaging applications, and exhibits excellent adhesion to A-PET containers. Also, the aqueous coating composition does not require any of co-solvents, surfactants, and anti-fogging agents because the resin itself exhibits excellent water dispersibility and anti-fogging property. Based on this finding, the present invention has been completed.

That is, the present invention consists of the following configurations (1) to (9).
(1) An aqueous coating composition containing a polyester resin (A) and inorganic particles (B), wherein the polyester resin (A) satisfies the following conditions (i) to (iii):
   (i) in the total polycarboxylic acid components that constitute the polyester resin (A), an aromatic polycarboxylic acid component having no sulfonic acid group constitutes 60 to 88 mol%, an aromatic polycarboxylic acid component having a sulfonic acid group constitutes 8 to 20 mol%, and an aliphatic polycarboxylic acid component and/or an alicyclic dicarboxylic acid component constitutes 5 to 20 mol%;
   (ii) in the total polyhydric alcohol components that constitute the polyester resin (A), a glycol component having an ether group constitutes more than 50 mol%;
   (iii) glass transition temperature of the polyester resin (A) is less than 20°C.
(2) The aqueous coating composition according to (1), wherein reduced viscosity of the polyester resin (A) is 0.2 to 0.7 dl/g.
(3) The aqueous coating composition according to (1), wherein particle diameter of the inorganic particles (B) is 1 to 30 µm and pore volume of the inorganic particles (B) is 2 ml/g or less.
(4) The aqueous coating composition according to (1), wherein the aqueous coating composition does not contain any curing agent.
(5) A laminated film comprising a thermoplastic resin film, wherein the aqueous coating composition according to any one of (1) to (4) is applied to at least one side of the thermoplastic resin film.
(6) The laminated film according to (5), wherein the thermoplastic resin film is a PET film.
(7) A packaging material having the laminated film according to (6) as a component.
(8) A lid material for a food packaging container having the packaging material according to (7) as a component.
(9) A food packaging container having the lid material according to (8) as a component.

### Effects of the Invention

The aqueous coating composition of the present invention exhibits anti-fogging property as well as excellent adhesion and easy peelability to PET. For this reason, the aqueous coating composition of the present invention can be suitably used as a heat seal layer for recyclable food packaging containers.

### Mode for Carrying Out the Invention

The embodiments of the present invention will be described in detail below.

The aqueous coating composition of the present invention contains a polyester resin (A) and inorganic particles (B) satisfying specific conditions.

### <Polyester resin (A)>

The polyester resin (A) has a chemical structure that can be obtained by polycondensation of a polycarboxylic acid component and a polyhydric alcohol component, wherein the polycarboxylic acid component and the polyhydric alcohol component each consists of one or two or more selected components.

As to the polycarboxylic acid component constituting the polyester resin (A), aromatic carboxylic acids, alicyclic polycarboxylic acids and/or aliphatic polycarboxylic acids can be used. Among them, aromatic dicarboxylic acids and aliphatic dicarboxylic acids are preferred.

In the total polycarboxylic acid components, the copolymerization ratio of the aromatic polycarboxylic acid component having no sulfonic acid group is 60 to 88 mol%, preferably 65 to 85 mol%, and more preferably 70 to 80 mol%. If the copolymerization ratio of the aromatic polycarboxylic acid component having no sulfonic acid group is less than the above range, adhesive strength may decrease when the resin composition is formed into a coating film. If the copolymerization ratio of the aromatic polycarboxylic acid component having no sulfonic acid group is more than the above range, the substrate may be damaged when the coating film is peeled off.

Examples of the aromatic polycarboxylic acid components having no sulfonic acid group include terephthalic acid, isophthalic acid, orthophthalic acid, 2,6-naphthalenedicarboxylic acid, 1,4-naphthalenedicarboxylic acid, 1,8-naphthalenedicarboxylic acid, phenylenedicarboxylic acid, trimellitic acid, pyromellitic acid, benzophenonetetracarboxylic acid, and alkali metal salts thereof. One or two or more of these can be used. Among these, isophthalic acid is preferred from the viewpoint of water dispersibility. Furthermore, in order to suppress gelation during synthesis, it is preferable that the copolymerization ratio of trifunctional or more aromatic polycarboxylic acid components is 3 mol% or less.

In the total polycarboxylic acid components, the copolymerization ratio of aromatic polycarboxylic acid component having a sulfonic acid group is 8 to 20 mol%, and preferably 10 to 15 mol%. If the copolymerization ratio of aromatic polycarboxylic acid component having a sulfonic acid group is less than the above range, water dispersibility of the resin may decrease. If the copolymerization ratio of aromatic polycarboxylic acid component having a sulfonic acid group is more than the above range, water resistance of the resin may decrease.

Examples of the aromatic polycarboxylic acid components having a sulfonic acid group include 5-sulfoisophthalic acid, 4-sulfonaphthalene-2,7-dicarboxylic acid, 5-[4-sulfophenoxy]isophthalic acid, and alkali metal salts thereof. One or two or more of these can be used.

In the total polycarboxylic acid components, the copolymerization ratio of the aliphatic polycarboxylic acid component and/or the alicyclic polycarboxylic acid component is 5 to 20 mol%, preferably 6 to 18 mol%, and more preferably 10 to 15 mol%. If the copolymerization ratio of the aliphatic polycarboxylic acid component and/or the alicyclic polycarboxylic acid component is less than the above range, water dispersibility of the resin may decrease. If the copolymerization ratio of the aliphatic polycarboxylic acid component and/or the alicyclic polycarboxylic acid component is more than the above range, moisture resistance of the resin may decrease. The aliphatic polycarboxylic acid component and/or the alicyclic polycarboxylic acid component preferably has no sulfonic acid group.

Examples of the aliphatic polycarboxylic acid components include succinic acid, glutaric acid, adipic acid, azelaic acid, sebacic acid, dodecanedioic acid, dimer acid, fumaric acid, maleic acid, itaconic acid, and citraconic acid. Examples of the alicyclic polycarboxylic acid components include 1,4-cyclohexanedicarboxylic acid, tetrahydrophthalic acid, hexahydroisophthalic acid, 1,2-cyclohexenedicarboxylic acid, and 2,5-norbornanedicarboxylic acid. One or two or more of these can be used.

In the total polyhydric alcohol components, the copolymerization ratio of the glycol component containing an ether group, such as diethylene glycol is preferably more than 50 mol%, more preferably 55 mol% or more, still more preferably 60 mol% or more, further preferably 70 mol% or more, and even more preferably 80 mol% or more, and it may even be 100 mol%. When the copolymerization ratio of the glycol component containing an ether group is more than 50 mol%, water dispersibility of the resin is improved. It is preferable, in terms of moisture resistance, that the copolymerization ratio of polyhydric alcohol components other than the glycol component containing an ether group is 50 mol% or less. Among the glycols containing an ether group, diethylene glycol is particularly preferred in that it does not cause an uneven distribution of hydrophilic parts in the resin skeleton and improves moisture resistance due to hydrolysis.

Examples of the polyhydric alcohol components other than diethylene glycol include aliphatic glycols such as ethylene glycol, 1,3-propanediol, 2-butyl-2-ethyl-1,3-propanediol, 2-methyl-1,3-propanediol, neopentyl glycol, 3-methyl-1,5-pentanediol, 1,4-butanediol, 2,4-diethyl-1,5-pentanediol, 1,6-hexanediol, 2-methyl-1,8-octanediol, 3-methyl-1,6-hexanediol, 4-methyl-1,7-heptanediol, 4-methyl-1,8-octanediol, and 1,9-nonanediol; alicyclic glycols such as 1,2-cyclohexanedimethanol, 1,3-cyclohexanedimethanol, 1,4-cyclohexanedimethanol, tricyclodecane glycols, and hydrogenated bisphenols; and polyether glycols such as triethylene glycol, polyethylene glycol, polypropylene glycol, and polytetramethylene glycol. One or two or more of these can be used.

Furthermore, in order to impart acid value to the polyester resin (A), an acid anhydride such as trimellitic anhydride or pyromellitic anhydride may be post-added (post-reacted) after polymerization of the polyester resin (A). Specific examples of the acid anhydride for imparting acid value to the polyester resin (A) include trimellitic anhydride, pyromellitic anhydride, and ethylene glycol bisanhydrotrimellitate. One or two or more of these may be used. When the acid anhydride is post-added (post-reacted) after polymerization of the polyester resin (A), the total copolymerization ratio of polycarboxylic acid components and polyhydric alcohol components may exceed 200 mol%. In this case, the total copolymerization ratio of the composition, excluding the components that have been post-added (post-reacted) after polymerization of the polyester resin (A), such as the acid anhydride, is calculated as 200 mol%.

When producing the polyester resin (A), various polymerization catalysts can be used, such as titanium compounds including tetra-n-butyl titanate, tetraisopropyl titanate, and titanium oxyacetylacetonate; antimony compounds including antimony trioxide and tributoxyantimony; germanium compounds including germanium oxide and tetra-n-butoxygermanium; and acetates of magnesium, iron, zinc, manganese, cobalt, and aluminum. One or two or more of these catalysts can be used.

The method for producing the polyester resin (A) is not particularly limited. Examples thereof include: 1) a method in which a polycarboxylic acid and a polyhydric alcohol are heated in the presence of a catalyst (if any), subjected to a dehydration esterification step, and then to a polycondensation reaction with removal of polyhydric alcohols; and 2) a method in which an alcohol ester of a polycarboxylic acid and a polyhydric alcohol are heated in the presence of a catalyst (if any), subjected to a transesterification reaction, and then to a polycondensation reaction with removal of polyhydric alcohols. In the methods 1) and 2), a part or all of the acid components may be replaced with an acid anhydride.

Glass transition temperature (Tg) of the polyester resin (A) is less than 20°C, preferably - 15°C or higher and less than 20°C, and more preferably -10°C or higher and less than 20°C. When the Tg of the polyester resin (A) is less than 20°C, a lid material for a container in which the coating composition according to the present invention is used exhibits improved ease of opening. When the Tg of the polyester resin (A) is -15°C or higher, blocking is unlikely to occur during preparation of the coating composition.

Reduced viscosity (ηsp/c) of the polyester resin (A) is preferably 0.2 to 0.7 dl/g, and more preferably 0.3 to 0.6 dl/g. If the reduced viscosity of the polyester resin (A) is at the lower limit or higher, resin cohesiveness is improved resulting in excellent adhesion. If the reduced viscosity is at the upper limit or lower, water dispersibility is improved. The reduced viscosity can be freely adjusted by changing the polymerization time, temperature, and degree of reduced pressure during polymerization (in the case of reduced pressure polymerization) of the polyester resin.

The content of the polyester resin (A) is preferably 95 mass % or more relative to 100% by mass of the solid content of the aqueous coating composition. By setting the content of the polyester resin (A) at the lower limit or higher, excellent anti-fogging property and adhesion can be achieved without blending any anti-fogging agent. This is due to the presence of the aromatic polycarboxylic acid component having a sulfonic acid group and the glycol component containing an ether group, which are the hydrophilic part of the polyester resin (A).

### <Inorganic particles (B)>

The inorganic particles (B) are not particularly limited. Examples thereof include inorganic particles containing oxides, hydroxides, sulfates, carbonates, or silicates of metals such as magnesium, calcium, barium, zinc, zirconium, molybdenum, silicon, antimony, or titanium. Among these inorganic particles, silica particles are particularly preferred. Shape of the inorganic particles is not particularly limited, and any shape such as powdery, granular, pellet-like, flat plate-like, or needle-like is conceivable.

Average particle size of the inorganic particles (B) is preferably 1 to 30 µm, more preferably 1 to 20 µm, and even more preferably 1 to 12 µm. If the average particle size is below the above range, anti-blocking effect may not be achieved. If the average particle size is greater than the above range, adhesive strength when formed into a coating film may decrease.

Pore volume of the inorganic particles (B) is preferably 2 ml/g or less, and more preferably 1 ml/g or less. If the pore volume of the inorganic particles (B) is greater than 2 ml/g, the particles may be destroyed during preparation of the coating composition, and sufficient anti-blocking effect may not be achieved. In addition, from the viewpoint of achieving the anti-blocking effect, the pore volume of the inorganic particles (B) is preferably 0.1 ml/g or more.

The content of the inorganic particles (B) is preferably less than 5 mass % relative to 100 mass % of the solid content of the aqueous coating composition. If the content of the inorganic particles (B) is at the upper limit or lower, anti-blocking properties may be achieved without reducing adhesion. In addition, from the viewpoint of achieving anti-blocking effect, the content of the inorganic particles (B) is preferably 0.5% by mass or more relative to 100% by mass of the solid content of the aqueous coating composition.

The aqueous coating composition of the present invention can form a coating film without blending any curing agent. Therefore, it is preferable that the aqueous coating composition of the present invention substantially contains no curing agent. That is, it is preferable that the content of the curing agent is less than 1 part by mass (solid content basis) relative to 100 parts by mass (solid content basis) of the polyester resin (A). Omitting the curing agent facilitates the recycling of the formed coating film.

In the aqueous coating composition of the present invention, the content of the curing agent is preferably less than 1 part by mass relative to 100 parts by mass (solid content basis) of the polyester resin (A), more preferably less than 0.5 parts by mass, and even more preferably less than 0.1 parts by mass, and most preferably the aqueous coating of the present invention contains no curing agent at all.

Here, "curing agent" refers to a known curing agent that reacts with a polyester resin so as to form a crosslinked structure. Examples of reactions that form the crosslinked structure include reactions in which unsaturated double bonds in the polyester resin undergo radical addition, cationic addition, or anionic addition so as to form intermolecular carbon-carbon bonds, and reactions in which intermolecular bonds are formed through condensation reactions, polyaddition reactions, transesterification reactions, or similar reactions involving polycarboxylic acid groups or polyhydric alcohol groups in the polyester resin. Examples of the curing agent include phenolic resins, amino resins, isocyanate compounds, epoxy compounds, β-hydroxylamide compounds, and resins containing unsaturated bonds.

In the aqueous coating composition of the present invention, the content of the anti-fogging agent is preferably less than 1 part by mass relative to 100 parts by mass (solid content basis) of the polyester resin (A), more preferably less than 0.5 part by mass, and even more preferably less than 0.1 part by mass, and most preferably the aqueous coating composition of the present invention contains no anti-fogging agent at all.

Examples of the anti-fogging agent include anionic surfactants, nonionic surfactants, cationic surfactants, and amphoteric surfactants.

### <Laminated film>

The laminated film of the present invention comprises a thermoplastic resin film and is constructed by applying the above-described aqueous coating composition to at least one side of the thermoplastic resin film. In particular, the laminated film of the present invention is obtained by applying the above-mentioned aqueous coating composition to the thermoplastic resin film that serves as a base material, and then performing a drying treatment.

Examples of the thermoplastic resin film include polyester-based resin films, polypropylene-based resin films, polyamide-based resin films, polyvinyl alcohol-based resin films, and polyvinylidene chloride-based resin films. Among these, polyester resin-based films, and especially PET films, are preferred because they are suitable as lid materials for food packaging containers.

The laminated film of the present invention exhibits excellent adhesion and anti-fogging property, making it suitable as a component of packaging materials and blister packs for pharmaceuticals and the like. In particular, the laminated film of the present invention is suitable as a lid material for food packaging containers for fresh foods, processed foods such as yogurt, and other products. When the laminated film of the present invention is used as a lid material for food packaging containers, the contents can be sealed by heat-sealing the applied surface of the laminated film to the food packaging container, and the lid material can also exhibit anti-fogging property. The food packaging container is not particularly limited, and it is preferably made of a polyester-based resin.

### [Examples]

The present invention will be described in more detail below with reference to Examples. However, the present invention is not limited to Examples. In the Examples and Comparative examples, "parts" refers to parts by mass.

### (Method for measuring physical properties)

### Measurement of composition of polyester resin

The molar ratios of polycarboxylic acid component and polyhydric alcohol component constituting the polyester resin were determined using a 400 MHz ¹H-nuclear magnetic resonance spectrometer (¹H-NMR). Deuterated chloroform was used as the solvent.

### Measurement of glass transition temperature (Tg)

The glass transition temperature was measured using a differential scanning calorimetry (DSC) (DSC-220 manufactured by Seiko Instruments Inc.). A sample (polyester resin for heat-sealing) (5 mg) was sealed in an aluminum container of a pushing cover type, and the measurement was conducted from -100°C to 250°C at a heating rate of 20°C/min. In an endothermic curve obtained during the measurement, the glass transition temperature was determined as the temperature at the intersection between the extrapolated baseline below the glass transition temperature and the tangent line drawn at the maximum slope from the onset to the apex of the peak.

### Measurement of reduced viscosity (unit: dl/g)

The polyester resin was dissolved in phenol/tetrachloroethane (mass ratio: 6/4) at a sample concentration of 0.1 g/25 ml and measured using an Ubbelohde viscometer at a measurement temperature of 30°C.

### Evaluation of water dispersibility

The polyester resin (210 parts by mass) was mixed with water (490 parts by mass), and the resulting mixture was dissolved by stirring at 80°C. The dispersion state at that time was evaluated according to the following evaluation criteria.

### <Evaluation Criteria>

∘∘: The mixture was dispersed in water without leaving any unemulsified material, within 1 hour of stirring. Here, "unemulsified material" refers to a component that settles after the aqueous dispersion is left to stand at 25°C for 1 day after preparation.
∘: More than 1 hour and up to 3 hours of stirring was required for the mixture to be dispersed in water without leaving any unemulsified material.
×: The mixture failed to be dispersed in water or left unemulsified material, even when stirred for more than 3 hours.

### Evaluation of moisture resistance

The polyester resin was stored (left standing) at 40°C and 80% RH for two weeks, and its reduced viscosity retention rates (before storage/after storage) were evaluated.

### <Evaluation Criteria>

∘: The reduced viscosity retention rate was 90% or more
×: The reduced viscosity retention rate was less than 90%

### <Average particle diameter of inorganic particles>

The average particle diameter of the inorganic particles was measured using a LA-750 particle size analyzer manufactured by HORIBA. The particle diameter corresponding to 50 mass percent was read, and this value was used as the average particle diameter.

### <Pore volume of inorganic particles>

BET nitrogen adsorption isotherm was measured using an AS-1 manufactured by Quantachrome, and the pore volume of the inorganic particles was determined. Specifically, the value determined at a relative pressure of P/P0 = 0.98 was used as the pore volume.

### Preparation of laminated films for evaluation

The aqueous coating compositions obtained in the Examples and Comparative Examples were each applied onto 25 µm-thick biaxially oriented PET film (Toyobo Ester E5102, manufactured by Toyobo Co., Ltd.) so as to give an application thickness of 3-4 µm. The resulting films were then dried at 100°C for 60 seconds so as to obtain laminated films for evaluation.

### Evaluation of anti-blocking property

A 10 cm-square was cut from the laminated film for evaluation, and the coated surface thereof was heat-pressed onto a 10 cm-square unprocessed surface of a 25 µm-thick A-PET film at a temperature of 45°C and a pressure of 1.5 MPa for 30 seconds. The anti-blocking property was then evaluated by peeling the film off by hand.

### <Evaluation Criteria>

∘: The film was peeled off by hand without making a tear.
×: The film was not peeled off by hand without making a tear.

### Evaluation of anti-fogging property

A 200ml-mayonnaise bottle was filled with 100ml of 50°C water. Then, the opening of the bottle was covered by the laminated film for evaluation in such a way that the coated surface of the laminated film faces inward. The bottle was then left to stand at 5°C for 1 hour while the coated surface of the laminated film would not come into direct contact with the water. Then, the appearance of the laminated film was visually inspected.

### <Evaluation Criteria>

∘: No condensation was observed on the laminated film.
×: Condensation was observed on the laminated film.

### Peel strength (adhesion)

The coated surface of the laminated film for evaluation was heat-sealed to a 25 µm-thick A-PET film at a temperature of 130°C and a pressure of 0.2 MPa for 1 second. Then, a 15 mm-wide test piece was cut out from the resulting structure. A 180° peel test was conducted using an Autograph AG-Xplus manufactured by Shimadzu Corporation at 25°C and at a tensile speed of 200 mm/min, and the peel strength of the test piece was measured.

### <Evaluation Criteria>

∘∘: The peel strength was 7N/15mm or more.
∘: The peel strength was 5N/15mm or more, and less than 7N/15mm.
Δ: The peel strength was less than 5N/15mm.
×: The test piece was torn.

### Synthesis of polyester resin (A-1)

In a reaction vessel equipped with a stirrer, a thermometer, a heating device, a cooling device, and a distillation condenser, 373 parts by mass of dimethyl isophthalate, 71 parts by mass of dimethyl 5-sulfoisophthalate, 458 parts by mass of diethylene glycol, and 0.2 part by mass of tetrabutyl titanate were charged. Next, a transesterification reaction was carried out over 3 hours while raising the temperature to 220°C. After that, the temperature was lowered to 150°C, 49 parts by mass of sebacic acid was added, and an esterification reaction was carried out over 4 hours while raising the temperature again to 220°C. After the esterification reaction was completed, the pressure in the system was reduced to 10 torr over 60 minutes while raising the temperature to 270°C. Then, the pressure was further reduced to a vacuum of 1 torr or less, and a polycondensation reaction was carried out at 270°C until a predetermined viscosity was reached. After the polycondensation reaction was completed, the polyester resin was taken out and cooled so as to obtain the polyester resin (A-1).

### Synthesis of polyester resins (A-2) to (A-10) and (B-1) to (B-9)

In the same manner as in the synthesis of polyester resin (A-1), polyester resins (A-2) to (A-10) and (B-1) to (B-9) were obtained by changing the types and blending ratios of the raw materials as shown in Table 1.

### Example 1

### Preparation of aqueous coating composition (A-1)

The polyester resin (A-1) was dispersed in water according to the following procedure. In a reaction vessel equipped with a stirrer, a condenser, and a thermometer, 206 parts by mass of the polyester resin (A-1), 4 parts by mass of silica particles (powder, particle diameter 3 µm, pore volume 0.6 ml/g), and 490 parts by mass of water were charged and the mixture was stirred at 80°C for 1 to 3 hours. After cooling to room temperature, the mixture was taken out from the reaction vessel so as to obtain the aqueous coating composition (A-1).

### Examples 2-10, Comparative Examples 1-9

The aqueous coating compositions (A-2) to (A-10) and (B-1) to (B-9) were obtained using the polyester resins (A-2) to (A-10) and (B-1) to (B-9), respectively, in the same manner as in Example 1.

Table 1 shows the composition of the polyester resin, physical properties, and evaluation results of various properties for Examples 1 to 10 and Comparative Examples 1 to 9.

**[Table 1]**

| | | | Example 1 | Example 2 | Example 3 | Example 4 | Example 5 | Example 6 | Example 7 |
|---|---|---|---|---|---|---|---|---|---|
| Polyester resin | | | A-1 | A-2 | A-3 | A-4 | A-5 | A-6 | A-7 |
| Composition of polyester resin | Polycarboxylic acid (mol%) | terephthalic acid | | 30 | | | | | |
| | | isophthalic acid | 80 | 55 | 65 | 65 | 65 | 80 | 80 |
| | | o-phthalic acid | | | | | | | |
| | | sebacic acid | 10 | 5 | 20 | 20 | 20 | 10 | 10 |
| | | 1,4-cyclohexanedicarboxylic acid | | | | | | | |
| | | trimellitic anhydride | | | | | | | |
| | | 5-sulfoisophthalic acid | 10 | 10 | 15 | 15 | 15 | 10 | 10 |
| | Polyhydric alcohol (mol%) | ethylene glycol | | | | | 20 | | |
| | | diethylene glycol | 100 | 100 | 100 | 60 | 80 | 100 | 100 |
| | | hexanediol | | | | 40 | | | |
| Inorganic particles (wt%/PEs100) | | | 2 | 2 | 2 | 2 | 2 | 2 | 2 |
| Tg (°C) | | | 6 | 14 | -9 | -6 | 18 | 4 | 8 |
| Reduced viscosity (dl/g) | | | 0.45 | 0.30 | 0.60 | 0.50 | 0.40 | 0.20 | 0.70 |
| Water dispersibility | | | ○○ | ○ | ○○ | ○ | ○○ | ○○ | ○ |
| Moisture resistance | | | ○ | ○ | ○ | ○ | ○ | ○ | ○ |
| Anti-blocking | | | ○ | ○ | ○ | ○ | ○ | ○ | ○ |
| Anti-fogging | | | ○ | ○ | ○ | ○ | ○ | ○ | ○ |
| Peel strength (adhesion) | | | ○○ | ○ | ○ | ○ | ○ | ○ | ○ |

| | | | Example 8 | Example 9 | Example 10 | Comparative Example 1 | Comparative Example 2 | Comparative Example 3 | Comparative Example 4 |
|---|---|---|---|---|---|---|---|---|---|
| Polyester resin | | | A-8 | A-9 | A-10 | B-1 | B-2 | B-3 | B-4 |
| Composition of polyester resin | Polycarboxylic acid (mol%) | terephthalic acid | | | | | | | |
| | | isophthalic acid | 70 | 60 | 52 | 80 | 50 | 90 | 65 |
| | | o-phthalic acid | | 20 | 30 | | | | |
| | | sebacic acid | | 10 | 5 | 10 | 35 | 0 | 25 |
| | | 1,4-cyclohexanedicarboxylic acid | 20 | | | | | | |
| | | trimellitic anhydride | | | 3 | | | | |
| | | 5-sulfoisophthalic acid | 10 | 10 | 10 | 10 | 15 | 10 | 10 |
| | Polyhydric alcohol (mol%) | ethylene glycol | | | | | | | |
| | | diethylene glycol | 100 | 100 | 100 | 100 | 100 | 100 | 100 |
| | | hexanediol | | | | | | | |
| Inorganic particles (wt%/PEs100) | | | 2 | 2 | 2 | 0 | 2 | 2 | 2 |
| Tg (°C) | | | 14 | 2 | 7 | 6 | -32 | 28 | -17 |
| Reduced viscosity (dl/g) | | | 0.50 | 0.50 | 0.40 | 0.45 | 0.45 | 0.45 | 0.45 |
| Water dispersibility | | | ○○ | ○○ | ○○ | ○○ | ○○ | ○○ | ○○ |
| Moisture resistance | | | ○ | ○ | ○ | ○ | × | ○ | × |
| Anti-blocking | | | ○ | ○ | ○ | × | × | ○ | × |
| Anti-fogging | | | ○ | ○ | ○ | ○ | ○ | ○ | ○ |
| Peel strength (adhesion) | | | ○ | ○ | ○ | ○○ | Δ | × | ○ |

| | | | Comparative Example 5 | Comparative Example 6 | Comparative Example 7 | Comparative Example 8 | | Comparative Example 9 | |
|---|---|---|---|---|---|---|---|---|---|
| Polyester resin | | | B-5 | B-6 | B-7 | B-8 | | B-9 | |
| Composition of polyester resin | Polycarboxylic acid (mol%) | terephthalic acid | | | | | | | |
| | | isophthalic acid | 85 | 65 | 80 | 75 | | 75 | |
| | | o-phthalic acid | | | | | | | |
| | | sebacic acid | 0 | 10 | 15 | 10 | | 10 | |
| | | 1,4-cyclohexanedicarboxylic acid | | | | | | | |
| | | trimellitic anhydride | | | | | | | |
| | | 5-sulfoisophthalic acid | 15 | 25 | 5 | 15 | | 15 | |
| | Polyhydric alcohol (mol%) | ethylene glycol | | | | | | 30 | |
| | | diethylene glycol | 100 | 100 | 100 | 40 | | 70 | |
| | | hexanediol | | | | 60 | | | |
| Inorganic particles (wt%/PEs100) | | | 2 | 2 | 2 | 2 | | 2 | |
| Tg (°C) | | | 10 | 18 | 10 | 10 | | 39 | |
| Reduced viscosity (dl/g) | | | 0.45 | 0.45 | 0.45 | 0.45 | | 0.45 | |
| Water dispersibility | | | × | ○○ | × | × | | ○ | |
| Moisture resistance | | | ○ | × | ○ | ○ | | ○ | |
| Anti-blocking | | | - | ○ | - | - | | ○ | |
| Anti-fogging | | | - | ○ | - | - | | × | |
| Peel strength (adhesion) | | | - | ○ | - | - | | × | |

As is clear from Table 1, the aqueous coating compositions of Examples 1 to 10 achieved good water dispersibility, moisture resistance, anti-blocking property, anti-fogging property, and adhesion. On the other hand, in the aqueous coating composition of Comparative Example 1, anti-blocking property was insufficient due to the absence of inorganic particles. Furthermore, in the aqueous coating compositions of Comparative Examples 2 to 9, one or more physical properties were insufficient due to differences in the composition ratio of polyester resins or differences in the glass transition temperatures.

### Industrial Applicability

The laminated film coated with the aqueous coating composition of the present invention exhibits excellent water dispersibility, moisture resistance, anti-blocking property, anti-fogging property, and adhesion when heat-sealed as a lid for a packaging container. Furthermore, the aqueous coating composition of the present invention exhibits excellent recyclability when applied to a thermoplastic resin film because no anti-fogging agent is used. Therefore, the aqueous coating composition of the present invention is extremely useful in the food packaging container industry.

## Claims

1. An aqueous coating composition containing a polyester resin (A) and inorganic particles (B), wherein the polyester resin (A) satisfies the following conditions (i) to (iii):
(i) in the total polycarboxylic acid components that constitute the polyester resin (A), an aromatic polycarboxylic acid component having no sulfonic acid group constitutes 60 to 88 mol%, an aromatic polycarboxylic acid component having a sulfonic acid group constitutes 8 to 20 mol%, and an aliphatic polycarboxylic acid component and/or an alicyclic dicarboxylic acid component constitutes 5 to 20 mol%;
(ii) in the total polyhydric alcohol components that constitute the polyester resin (A), a glycol component having an ether group constitutes more than 50 mol%;
(iii) glass transition temperature of the polyester resin (A) is less than 20°C.

2. The aqueous coating composition according to Claim 1, wherein reduced viscosity of the polyester resin (A) is 0.2 to 0.7 dl/g.

3. The aqueous coating composition according to Claim 1, wherein particle diameter of the inorganic particles (B) is 1 to 30 µm and pore volume of the inorganic particles (B) is 2 ml/g or less.

4. The aqueous coating composition according to Claim 1, wherein the aqueous coating composition does not contain any curing agent.

5. A laminated film comprising a thermoplastic resin film, wherein the aqueous coating composition according to any one of Claims 1 to 4 is applied to at least one side of the thermoplastic resin film.

6. The laminated film according to Claim 5, wherein the thermoplastic resin film is a PET film.

7. A packaging material having the laminated film according to Claim 6 as a component.

8. A lid material for a food packaging container having the packaging material according to Claim 7 as a component.

9. A food packaging container having the lid material according to Claim 8 as a component.
